# EUROPEAN PATENT APPLICATION

(11) **EP 2 674 848 A2**
(43) Date of publication of application: **18.12.2013**
(21) Application number: 13164401.5
(22) Date of filing: 19.04.2013
(51) Int. Cl.: G06F 3/0488, G06F 3/0485

(54) **Information terminal device and display control method**

(30) Priority: 11.06.2012 JP 2012132065
(71) Applicant: FUJITSU LIMITED, Kawasaki-shi, Kanagawa 211-8588 (JP)
(72) Inventor: FUKUSHIMA, Daiki, Kawasaki-shi, Kanagawa 211-8588 (JP); TAKAZAWA, Naoki, Kawasaki-shi, Kanagawa 211-8588 (JP); AKAMA, Katsuaki, Kawasaki-shi, Kanagawa 211-8588 (JP)
(74) Representative: Ward, James Norman

(57) **Abstract**

An information terminal device includes a displaying unit that displays information and that detects, when a touch is performed on a displayed screen, a touched position, a determining unit that determines whether an area containing the touched position detected by the displaying unit is a scroll area targeted for scrolling, and a switching unit that switches, in accordance with the determination result obtained by the determining unit, a control mode of the displayed screen displayed on the displaying unit.

## Description

### FIELD

The embodiment discussed herein is directed to an information terminal device and a display control method.

### BACKGROUND

In recent years, touch panels have been widely used on information terminal devices, such as mobile phones. Information terminal devices with a touch panel mounted thereon can receive an operation input by detecting a user's finger touching a screen that displays information. Consequently, the user can operate intuitively, which improves the convenience of the information terminal devices.

Examples of a typical operation performed via a touch panel include scrolling or selecting a button. Scrolling is an operation in which a displayed screen is scrolled in accordance with the movements of a user's finger that is brought into contact with the touch panel. Furthermore, selecting a button or the like is an operation in which a user touches the area in which a button is displayed to select the button or an operation in which the function is performed in accordance with the selected button or the like.

Although, as described above, there are several kinds of operation that use a touch panel, all of the operations, however, basically depend on detecting whether the touch panel is touched or not. Accordingly, as in the case when, for example, multiple buttons or the like are displayed on a scrollable displayed screen, there may be a case in which it is difficult to determine the process desired by a user. Specifically, in the case described above, it is difficult to determine whether the movements of the user's finger brought into contact with the touch panel is a movement intended to scroll the screen or is a movement intended to select a target button.

Consequently, in the initial state, the mode may be set such that the screen is scrolled in accordance with the movements of the user's finger. Then, if a selectable button is continuously touched for a predetermined time period, the mode may be shifted to a mode in which the subject button or the like is selected. Consequently, even when the user is scrolling the screen, by continuously touching the target button or the like for more than a predetermined time period, the user can change modes and thus performs the desired operation.
Patent Document 1: Japanese Laid-open Patent Publication No. 2011-154555
Patent Document 2: Japanese Laid-open Patent Publication No. 2007-272840
Patent Document 3: Japanese Laid-open Patent Publication No. 2012-27875

However, with the technology described above, a user needs to continuously touch for at least a predetermined time period or more to select the target button or the like; therefore, there is a problem in that the operation thereof is inconvenient. Specifically, to select the target button or the like, the user needs to touch the button or the like for more than a predetermined time period, i.e., needs to perform a "long press", which detracts from its simplicity. Furthermore, it takes relatively long time from when the target button or the like is displayed until the button is actually selected, which delays the process desired by a user.

Accordingly, it is an object in one aspect of an embodiment of the invention to provide an information terminal device and a display control method that can promptly and simply perform the process desired by a user.

### SUMMARY

According to an aspect of an embodiment, an information terminal device includes a displaying unit that displays information and that detects, when a touch is performed on a displayed screen, a touched position, a determining unit that determines whether an area containing the touched position detected by the displaying unit is a scroll area targeted for scrolling, and a switching unit that switches, in accordance with the determination result obtained by the determining unit, a control mode of the displayed screen displayed on the displaying unit.

### BRIEF DESCRIPTION OF DRAWINGS

FIG. 1 is a schematic diagram illustrating an external view of a mobile terminal device according to an embodiment;
FIG. 2 is a block diagram illustrating the configuration of the mobile terminal device according to the embodiment;
FIG. 3 is a functional block diagram illustrating the function of a processor according to the embodiment;
FIG. 4 is a flowchart illustrating the operation of the mobile terminal device according to the embodiment;
FIG. 5 is a flowchart illustrating an area determination operation according to the embodiment;
FIG. 6 is a schematic diagram illustrating an example of an area according to the embodiment;
FIG. 7 is a schematic diagram illustrating an example of the operation performed in a non-scroll area; and
FIG. 8 is a schematic diagram illustrating an example of the operation performed in a scroll area.

### DESCRIPTION OF EMBODIMENT

Preferred embodiment of the present invention will be explained with reference to accompanying drawings. In the embodiment, a description will be given of a mobile terminal device, such as a mobile phone, as an example of the information terminal device; however, the present invention is not limited to the embodiment.

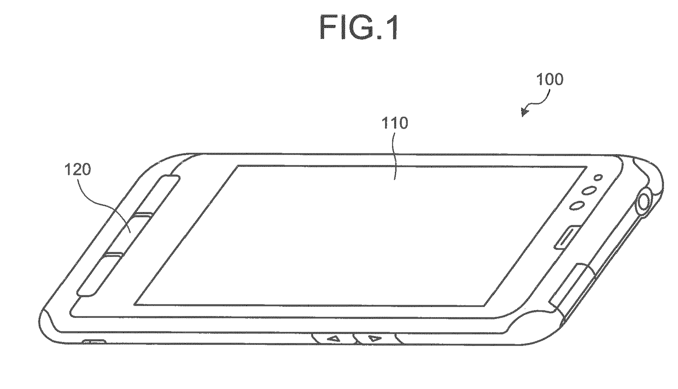

FIG. 1 is a schematic diagram illustrating an external view of a mobile terminal device 100 according to an embodiment. The mobile terminal device 100 illustrated in FIG. 1 includes a touch panel 110 and an operation key 120.

The touch panel 110 displays various kinds of information, detects a touch performed by a user's finger, and receives an operation input depending on this contact. Specifically, the touch panel 110 is used to scroll a displayed screen in accordance with the movements of a user's finger that is brought into contact with the touch panel or displays a button or the like that is being displayed in an area touched by a user's finger such that the button can be distinguished from other neighboring buttons or the like.

Furthermore, the touch panel 110 may also detect a pressure applied by a user's finger and thus detect that a touched position has been pressed. Specifically, after displaying the area touched by a user's finger such that the area is distinguishable from a neighboring area, if the touched position is pressed harder, the touch panel 110 may also detect that the area displayed in a distinguishable manner is being pressed. Consequently, it is possible to perform an operation input such that selecting a button or the like by touching is distinguished from executing a process that is performed in accordance with the pressed button or the like. In the description below, contact with or pressing a button by a user's finger or the like may sometimes be referred to as a "touch".

The operation key 120 is a physical key that can be pressed and receive an operation input by a user pressing the operation key 120. Specifically, the operation key 120 include physical keys or the like that are used to switch on or off the power supply of, for example, the mobile terminal device 100. The touch panel 110 and the operation key 120 receive operation inputs in a complementary manner, thereby allowing the mobile terminal device 100 to perform various functions.

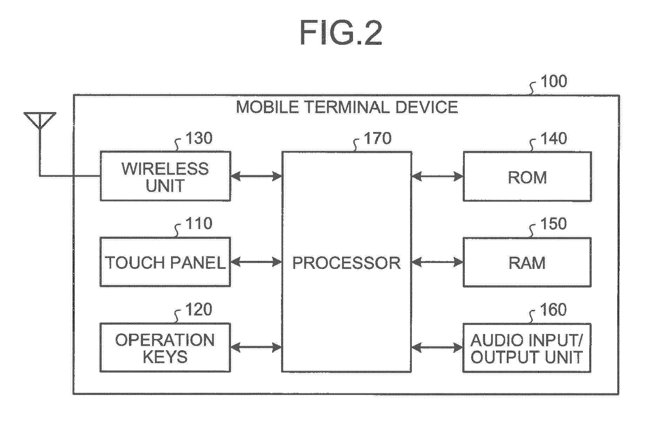

FIG. 2 is a block diagram illustrating the configuration of the mobile terminal device 100 according to the embodiment. The mobile terminal device 100 illustrated in FIG. 2 includes the touch panel 110, the operation key 120, a wireless unit 130, a read only memory (ROM) 140, a random access memory (RAM) 150, an audio input/output unit 160, and a processor 170.

As described above, the touch panel 110 displays information, detects a touch performed by a user, and receives an operation input. Furthermore, the operation key 120 receives an operation input together with the touch panel 110 in a complementary manner.

The wireless unit 130 receives a signal via an antenna and outputs the received signal to the processor 170. Furthermore, the wireless unit 130 transmits a signal created by the processor 170 via the antenna. If, the mobile terminal device 100 is, for example, a mobile phone that can make a call, the wireless unit 130 transmits or receives a signal containing a user's output voice, received voice, or the like.

The ROM 140 and the RAM 150 are storing units that store therein a program, data, or the like used by the processor 170.

The audio input/output unit 160 includes an audio input device, such as a microphone, and an audio output device, such as a speaker. If, the mobile terminal device 100 is, for example, a mobile phone that can make a call, the audio input/output unit 160 receives an input of a user's output voice or outputs a received voice.

The processor 170 includes, for example, a central processing unit (CPU) or a micro processing unit (MPU) and executes overall control of the mobile terminal device 100 by using the data stored in the ROM 140 and the RAM 150. For example, if the touch panel 110 receives an operation input due to a touch performed by a user, the processor 170 executes a process in accordance with the operation input or causes the touch panel 110 to display the execution result.

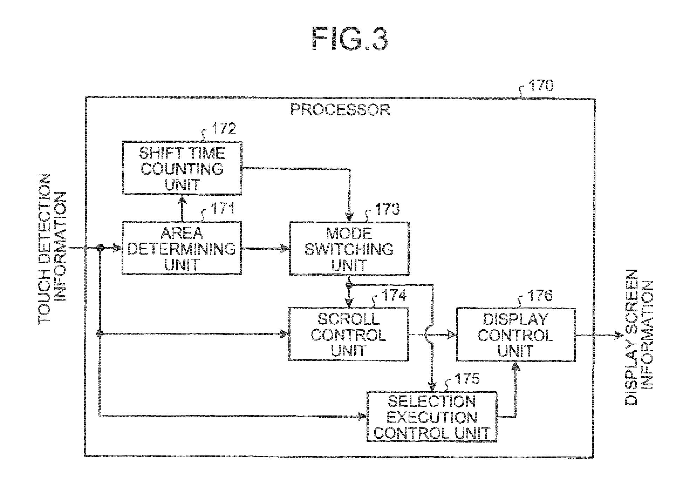

FIG. 3 is a functional block diagram illustrating the function of the processor 170 according to the embodiment. The processor 170 illustrated in FIG. 3 includes an area determining unit 171, a shift time counting unit 172, a mode switching unit 173, a scroll control unit 174, a selection execution control unit 175, and a display control unit 176.

If the touch panel 110 receives an operation input performed by a user, the area determining unit 171 acquires touch detection information containing information on, for example, the coordinates of the area in the touch panel 110 touched by the user (hereinafter, referred to as "touch coordinates"). Then, the area determining unit 171 determines whether the area displayed at the touch coordinates is a scroll area that contains a scrollable portion or is a non-scroll area that does not contain a scrollable portion. Specifically, if, for example, the overall size of the area containing the touch coordinates is greater than the size of the display area of the touch panel 110, the area determining unit 171 determines that this area is a scroll area. More specifically, if not all of the area containing the touch coordinates is displayed on the touch panel 110, the area determining unit 171 determines that this area is a scroll area.

Furthermore, if a scrollable portion, such as an object for editing text, is contained in, for example, an area containing the touch coordinates, the area determining unit 171 determines that this area is a scroll area. In contrast, if the whole area is displayed on the touch panel 110 and if a scrollable object is not contained, the area determining unit 171 determines that the area containing the touch coordinates is a non-scroll area.

If the area determining unit 171 determines that the area of the touch coordinates is a scroll area, the area determining unit 171 notifies the shift time counting unit 172 of this determination. Furthermore, the area determining unit 171 notifies the mode switching unit 173 of the determination result indicating whether the area of the touch coordinates is a scroll area or a non-scroll area. Every time a user starts to touch the touch panel 110, the area determining unit 171 determines whether the area of the touch coordinates that is touched first is a scroll area or a non-scroll area. Accordingly, if a user retouches the touch panel 110 after releasing his/her finger once from the touch panel 110, the area determining unit 171 sends a notification to the shift time counting unit 172 and the mode switching unit 173 in accordance with the determination result related to the newly touched area,

If the shift time counting unit 172 receives a notification from the area determining unit 171 indicating that it is determined that the area of the touch coordinates is a scroll area, the shift time counting unit 172 starts to count a predetermined shift time. Then, if the predetermined shift time, e.g., about 500 milliseconds (ms), elapses, the shift time counting unit 172 notifies the mode switching unit 173 of the elapse. The shift time counted by the shift time counting unit 172 is an extension time during which a screen displayed on the touch panel 110 shifts from a scrollable mode to a non-scrollable mode. Specifically, if a predetermined shift time has elapsed since the shift time counting unit 172 has started a count, the control mode of the screen displayed on the touch panel 110 is switched from a scrollable state to a non-scrollable state.

In accordance with the determination result obtained by the area determining unit 171 and the count of the shift time performed by the shift time counting unit 172, the mode switching unit 173 switches the control mode of the screen displayed on the touch panel 110. Specifically, if the mode switching unit 173 receives a determination result indicating that the area of the touch coordinates is a non-scroll area, the mode switching unit 173 decides to set the mode to a selection execution mode in which the screen is not scrolled. In the selection execution mode, a user can select a button or the like displayed on the touch panel 110 or perform a process in accordance with the selected button or the like. Furthermore, in the selection execution mode, even if a user moves his/her finger while continuing to touch the touch panel 110, the screen is not scrolled; for example, buttons or the like displayed at the positions touched by the user's finger are sequentially selected. When the mode switching unit 173 decides to set the mode to the selection execution mode, the mode switching unit 173 notifies the selection execution control unit 175 of the mode setting.

In contrast, if the mode switching unit 173 receives a determination result indicating that the area of the touch coordinates is a scroll area, the mode switching unit 173 decides to set the mode to a scroll mode in which the screen is scrolled. In the scroll mode, a user can scroll a screen in accordance with the movement of the user's finger by moving the finger while continuing to touch the touch panel 110. When the mode switching unit 173 decides to set the mode to the scroll mode, the mode switching unit 173 notifies the scroll control unit 174 of the mode setting.

Thereafter, if the mode switching unit 173 receives a notification from the shift time counting unit 172 indicating that a predetermined shift time has elapsed, the mode switching unit 173 decides to switch the mode from the scroll mode, which is the currently set mode, to the selection execution mode. Accordingly, the mode switching unit 173 notifies the scroll control unit 174 and the selection execution control unit 175 that the mode is switched from the scroll mode to the selection execution mode.

If the scroll control unit 174 receives a notification from the mode switching unit 173 indicating that the mode is set to the scroll mode, the scroll control unit 174 acquires the touch coordinates contained in the touch detection information and performs a control such that the screen of the touch panel 110 is scrolled in accordance with variation in the touch coordinates. Specifically, the scroll control unit 174 instructs the display control unit 176 to scroll the display on the touch panel 110 in accordance with the variation in the touch coordinates.

If the selection execution control unit 175 receives a notification from the mode switching unit 173 indicating that the selection execution mode is set, the selection execution control unit 175 acquires the touch coordinates contained in the touch detection information and instructs the display control unit 176 to display the button or the like that is being displayed at the touch coordinates such that the button or the like is distinguishable from other buttons or the like that are being displayed in the neighboring area. Specifically, from among the multiple buttons or the like being displayed on, for example, the touch panel 110, the selection execution control unit 175 instructs the display control unit 176 to highlight the buttons or the like that are being displayed at the touch coordinates and, in contrast, to normally display the other buttons or the like that are being displayed. For a method of distinguishably displaying a button or the like being displayed at the touch coordinates from the other buttons that are being displayed, in addition to using a highlighted display, varying display color or display density may also be used as a distinction or using an motion animation may also be used as a distinction. In the description below, displaying the buttons or the like at the touch coordinates in a distinguishable manner is referred to as a "focus display". Furthermore, the selection execution control unit 175 executes a process in accordance with the button or the like that is being displayed at the touch coordinates.

The display control unit 176 creates display screen information that is displayed on the touch panel 110 in accordance with the instruction received from the scroll control unit 174 and the selection execution control unit 175 and outputs the created display screen information to the touch panel 110. Specifically, in the scroll mode, under instruction from the scroll control unit 174, the display control unit 176 outputs the display screen information indicating that the display of the touch panel 110 is scrolled. Furthermore, in the selection execution mode, under instruction from the selection execution control unit 175, the display control unit 176 displays, by using the focus display, the button or the like currently displayed on the touch coordinates and outputs the display screen information containing the execution result of the process performed in accordance with the button or the like.

The area determining unit 171, the shift time counting unit 172, the mode switching unit 173, the scroll control unit 174, the selection execution control unit 175, and the display control unit 176 described above are reset when a user stops touching the touch panel 110. Specifically, each of the processing units executes the process described above if the finger of a user continue to touch the touch panel 110. In other words, a user can operate the mobile terminal device 100 without releasing the finger from the touch panel 110.

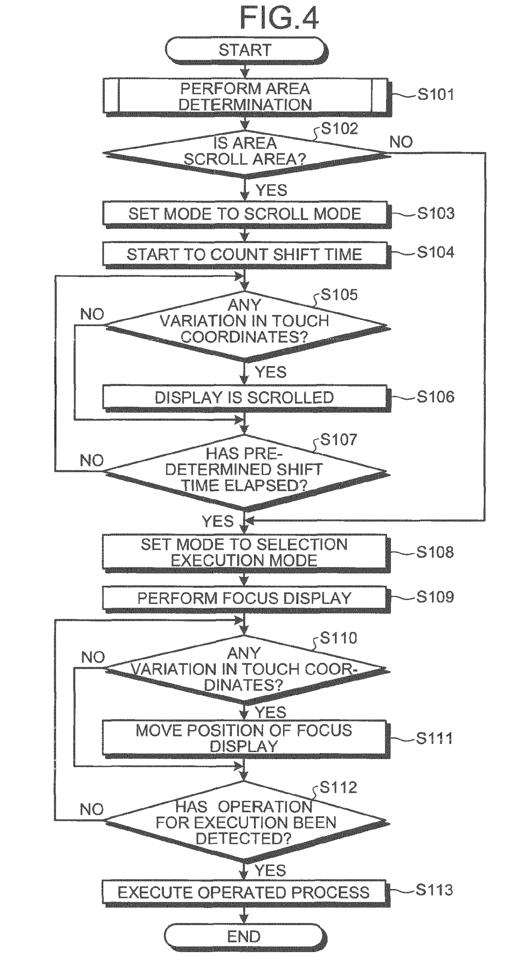

In the following, the operation of the mobile terminal device 100 configured as described above will be described with reference to the flowchart illustrated in FIG. 4.

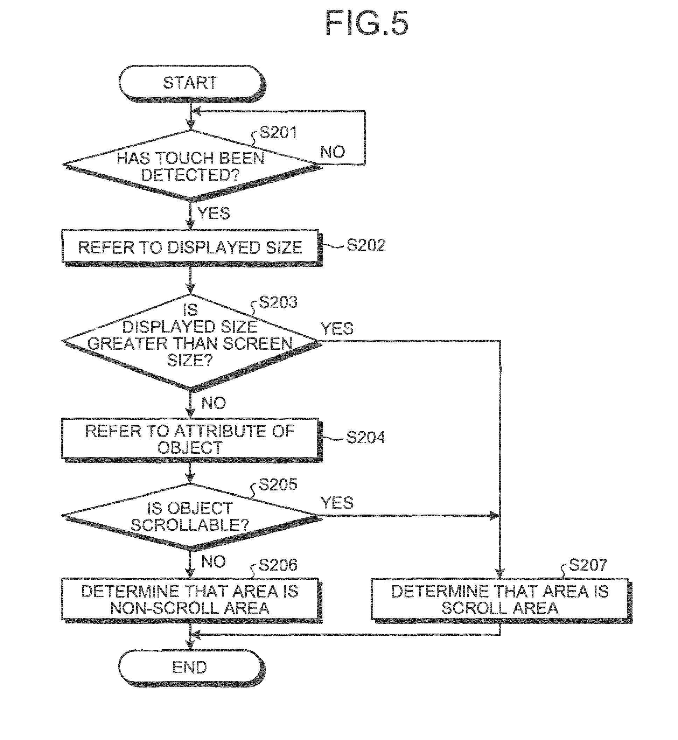

If the touch panel 110 detects a touch performed by a user, the area determining unit 171 acquires touch detection information containing the touch coordinates and performs an area determination on the area of the touch coordinates (Step S101). Specifically, the area determining unit 171 determines whether the area of the touch coordinates is a scroll area or a non-scroll area (Step S102). The area determination will be described in detail later with reference to the flowchart illustrated in FIG. 5.

If the result of the area determination indicates that the area of the touch coordinates is a non-scroll area (No at Step S102), a notification of that result is sent to the mode switching unit 173 and then the mode switching unit 173 immediately sets the mode to the selection execution mode (Step S108). Specifically, if the area of the touch coordinates is a non-scroll area, it means there is no possibility of receiving an operation input for scrolling the display of the touch panel 110 and thus selection of the execution mode is set without the mode being set to the scroll mode. Consequently, no delay occurs after a user touches the non-scroll area of the touch panel 110 until the time at which the focus display is performed on the touched button or the like or until a process in line with the touched button or the like is executed.

In contrast, if the result of the area determination indicates that the area of the touch coordinates is the scroll area (Yes at Step S102), a notification of that result is sent to the mode switching unit 173 and then the mode switching unit 173 sets the mode to the scroll mode (Step S103). Specifically, the mode switching unit 173 notifies the scroll control unit 174 that the scroll mode is set. Furthermore, if the area of the touch coordinates is a scroll area (Yes at Step S102), a notification to that effect is sent to the shift time counting unit 172. Then, the shift time counting unit 172 starts to count a predetermined shift time (Step S104).

If the scroll mode is set in this way, the scroll control unit 174 monitors the variation in the touch coordinates (Step S105). Then, if the touch coordinates vary (Yes at Step S105), the scroll control unit 174 instructs the display control unit 176 to scroll the display of the touch panel 110 in line with the variation in the touch coordinates. In response to this instruction, the display control unit 176 creates and outputs display screen information used to scroll the display of the touch panel 110 and thus the display of the touch panel 110 is scrolled (Step S106).

Furthermore, if the scroll mode is set, the shift time counting unit 172 monitors whether a predetermined shift time has elapsed (Step S107). If a predetermined shift time has not elapsed since the shift time counting unit 172 starts to count (No Step S107), the scroll control unit 174 continuously monitors the variation in the touch coordinates. Thereafter, if a predetermined shift time has elapsed (Yes at Step S107), a notification to that effect is sent from the shift time counting unit 172 to the mode switching unit 173. Then, the mode switching unit 173 switches the modes from the scroll mode to the selection execution mode (Step S108). Specifically, the scroll control unit 174 and the selection execution control unit 175 receives a notification indicating that the mode is switched to the selection execution mode by the mode switching unit 173.

As described above, even if the scroll mode is initially set due to the area of the touch coordinates being a scroll area, when a predetermined shift time has elapsed while a user continue to touch the touch panel 110, the setting to the selection execution mode is performed. Consequently, a specific operation for switching modes is not needed, and thus it is possible to simply perform a process desired by a user.

If setting to the selection execution mode is performed, the selection execution control unit 175 and the display control unit 176 perform a control such that the focus display is performed on the button that is being displayed at the touch coordinates (Step S109). Specifically, under instruction from the selection execution control unit 175, the display control unit 176 creates display screen information that is used to display the button or the like at the touch coordinates by using a focus display and outputs the display screen information to the touch panel 110. Furthermore, in the selection execution mode, the selection execution control unit 175 monitors the variation in the touch coordinates (Step S110). If the touch coordinates vary (Yes at Step S110), the selection execution control unit 175 instructs the display control unit 176 to move the focus display in accordance with the variation in the touch coordinates. In response to this instruction, the display control unit 176 creates display screen information that is used to switch the buttons or the like that are sequentially displayed in accordance with the variation in the touch coordinates by using the focus display, outputs the display screen information, and moves the position of the focus display (Step S111).

Furthermore, in the selection execution mode, the selection execution control unit 175 monitors the presence or absence of an executed operation, such as pressing a button or the like subjected to the focus display (Step S112). Then, during the time period for which an executed operation is not detected (No at Step S112), the selection execution control unit 175 continuously monitors the variation in the touch coordinates. Then, if an executed operation has been detected (Yes at Step S112), the selection execution control unit 175 executes the process in accordance with the selected button or the like that is subjected to the focus display (Step S113).

In the following, an operation of the area determination performed by the area determining unit 171 will be described with reference to the flowchart illustrated in FIG. 5.

The area determining unit 171 in the processor 170 waits for an output of the touch detection information containing the touch coordinates from the touch panel 110 (Step S201). If the touch panel 110 detects a touch performed by a user, the area determining unit 171 acquires the touch detection information containing the touch coordinates (Yes Step S201). If the touch detection information is acquired, the area determining unit 171 refers to the overall size of the area containing the touch coordinates (hereinafter, referred to as a "displayed size") (Step S202). Then, this displayed size is compared with the size of the display area of the touch panel 110 (hereinafter, referred to as a "screen size") (Step S203).

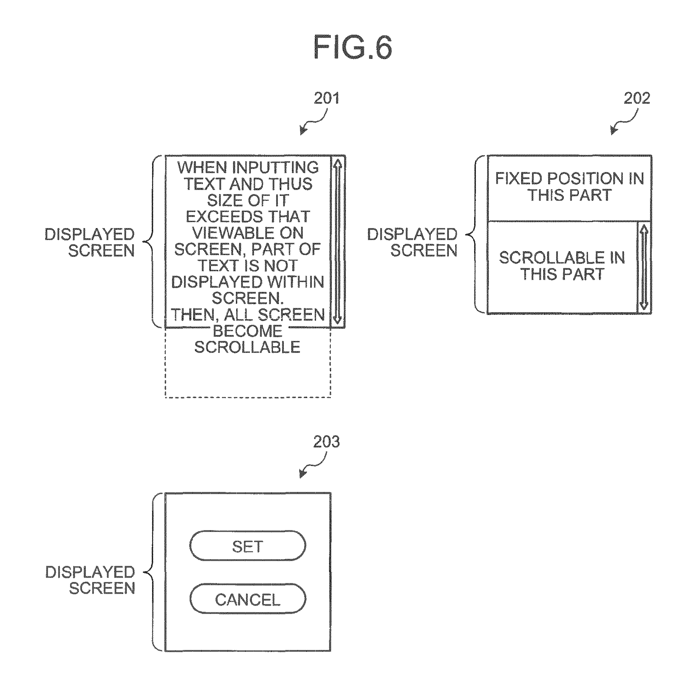

If the comparison result indicates that the displayed size is greater than the screen size (Yes at Step S203), this means the overall area is not displayed and thus the overall area can be viewed by scrolling, thereby it is determined that this area is a scroll area (Step S207). Specifically, for example, as in an area 201 illustrated in FIG. 6, if not all of the text is displayed within the displayed screen, by scrolling the display, the text surrounded by the broken line illustrated in FIG. 6 can be viewed. Consequently, it is determined that the area 201 is a scroll area.

In contrast, if the comparison result between the displayed size and the screen size indicates that the displayed size is less than the screen size (No at Step S203), this means the attribute of an object in the area containing the touch coordinates is used to be referred to (Step S204). Then, it is determined, from the attribute of the object, whether a scrollable object is contained in the area (Step S205). The attribute of the object mentioned here means the information indicating the type of object, such as a still image object or an object used for editing text performed by a user.

If it is determined that a scrollable object is contained in the area (Yes at Step S205), this means there is a possibility of performing an operation input by a user intending to scroll the display and thus it is determined that this area is a scroll area (Step S207). Specifically, for example, as in an area 202 illustrated in FIG. 6, if a scrollable object is present in a part of the area, there is a possibility of performing an operation input by a user intending to scroll the object. Consequently, it is determined that the area 202 is a scroll area.

In contrast, if it is determined that a scrollable object is not contained in the area (No at Step S205), this means a user does not perform an operation input intending to scroll the area and thus it is determined that the area is a non-scroll area (Step S206). Specifically, for example, as in an area 203 illustrated in FIG. 6, if the displayed size is within the screen size and does not contain a scrollable object, there is no possibility of the user performing an operation input intending to scroll the area. Consequently, it is determined that the area 203 is a non-scroll area.

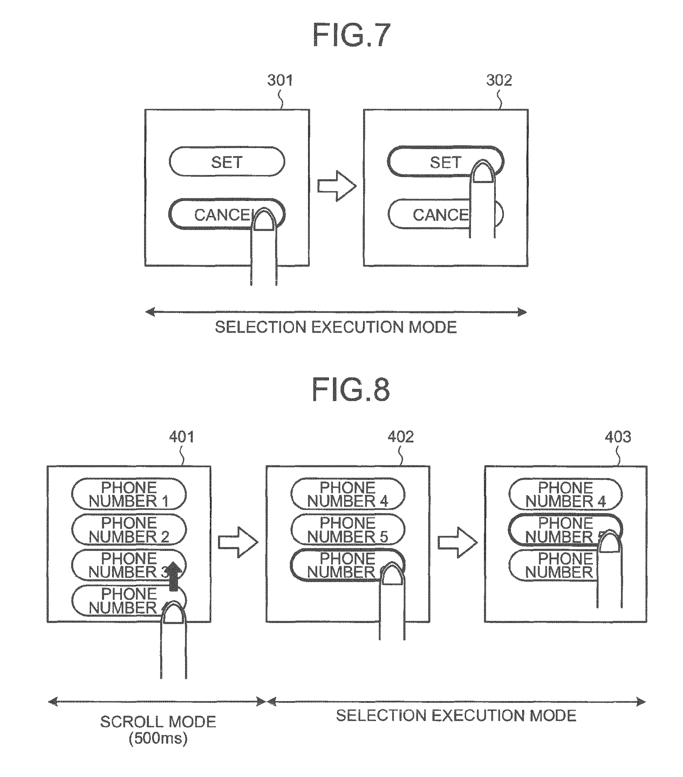

If it is determined that the area of the touch coordinates is a non-scroll area, as described above, the mode switching unit 173 immediately sets the mode to the selection execution mode. Accordingly, for example, if the area 203 illustrated in FIG. 6 is displayed, the focus display is performed on the button represented by a "set" or "cancel" button touched by the user and thus a process in accordance with each button can be executed. FIG. 7 illustrates an example of the operation performed in such a non-scroll area.

As illustrated in FIG. 7, if the area determining unit 171 determines that the area of the touch coordinates is a non-scroll area, the mode is immediately set to the selection execution mode. Consequently, if a user touches the "cancel" button on a screen 301, the "cancel" button is subjected to the focus display. If the user moves his/her finger while continuing to touch the touch panel 110, the touch coordinates vary; however, in this example, because selection execution mode is set, there is no possibility of the display of the touch panel 110 being scrolled. Then, if the user's finger moves to the "set" button, as represented by a screen 302, the "set" button is subjected to the focus display. FIG. 7 illustrates an example of the focus display in which the outer circumference of the button displayed on the touch coordinates is displayed with a bold frame.

As described above, in a non-scroll area, the selection execution mode is set when a user starts to touch. Then the button or the like displayed on the touch coordinates is immediately subjected to the focus display and thus a process in accordance with the button or the like can be executed. Consequently, if the user touches the touch panel 110, it is possible to promptly perform the focus display or a process.

In contrast, FIG. 8 illustrates an example of the operation performed in a scroll area. If the area determining unit 171 determines that the area of the touch coordinates is a scroll area, first, the scroll mode is set. Consequently, if a user moves his/her finger while continuing to touch a screen 401, the display of the touch panel 110 is scrolled. The duration of scroll mode to be set is, for example, the time period for which a predetermined shift time, such as 500 ms, elapses. If the shift time has elapsed, the mode is switched to the selection execution mode.

If the mode is switched to the selection execution mode, as represented by a screen 402, the button displayed on the touch coordinates is subjected to the focus display. Furthermore, after the mode is switched to the selection execution mode, if a user moves his/her finger while continuing to touch the screen 402, the display of the touch panel 110 is not scrolled. Instead, if the touch coordinates vary due to the movement of the user's finger, the buttons displayed on the touch coordinates are sequentially displayed in a focus display manner. Consequently, on a screen 403, the button represented by the "telephone number 5" is subjected to the focus display. Similarly to FIG. 7, FIG. 8 illustrates an example of the focus display in which the outer circumference of the button displayed on the touch coordinates is displayed with a bold frame.

As described above, in a scroll area, the scroll mode is set when a user starts a touch and the display is scrolled in accordance with the movement of the user's finger. If a predetermined shift time has elapsed, the mode is switched to the selection execution mode and the focus display moves in accordance with the movement of the user's finger. Consequently, the user can scroll the display in the scroll mode to adjust the display area of the touch panel 110 and then selects a desired button or the like after the mode is switched to the selection execution mode. At this point, the user can perform a series of operations while continuing to touch his/her finger on the touch panel 110, which makes it possible to simply perform a desired process.

As described above, according to the embodiment, it is determined whether the area touched by a user is a scroll area. If the touched area is a non-scroll area, the selection execution mode is immediately set and thus the displayed button or the like can be selected. Furthermore, if it is determined that the area touched by a user is a scroll area, the scroll mode is set and the mode is switched to the selection execution mode after a predetermined shift time has elapsed. Consequently, on a screen that does not need a scroll, if a user touches the touch panel, the area of the touched coordinates is immediately subjected to the focus display or the process associated with the touched area is performed. Furthermore, on the scrollable screen, a scroll is performed in accordance with the variation in the touched coordinates until a predetermined time elapses and, after the predetermined time has elapsed, selection or a process related to the touch coordinates is performed. Consequently, a user can promptly and simply perform his/her desired process.

It is possible to describe the operation of the mobile terminal device 100, which has been described above in the embodiment, as a program that can be executed by a computer. In such a case, the program may also be stored in a computer readable recording medium and installed in the computer, Examples of the computer readable recording medium includes a portable recording medium, such as a CD-ROM, a DVD disk, a USB memory, and the like or a semiconductor memory, such as a flash memory and the like.

According to an aspect of the information terminal device and the display control method disclosed in the present invention, an advantage is provided in that a user can promptly and simply perform his/her desired process.

## Claims

1. An information terminal device (100) comprising:
a displaying unit (110) that displays information and that detects, when a touch is performed on a displayed screen, a touched position;
a determining unit (171) that determines whether an area containing the touched position detected by the displaying unit (110) is a scroll area targeted for scrolling; and
a switching unit (173) that switches, in accordance with the determination result obtained by the determining unit (171), a control mode of the displayed screen displayed on the displaying unit (110).

2. The information terminal device (100) according to claim 1, wherein, when the determination result obtained by the determining unit (110) indicates that the area containing the touched position is not a scroll area, the switching unit (173) sets the control mode to a first control mode that moves a focus display that displays the touched position such that the touched position is distinguishable from surroundings in accordance with a movement of the touched position.

3. The information terminal device (100) according to claim 1 or 2, wherein, when the determination result obtained by the determining unit (171) indicates that the area containing the touched position is a scroll area, the switching unit (173) sets the control mode to a second control mode that scrolls the displayed screen of the displaying unit (110) in accordance with a movement of the touched position.

4. The information terminal device (100) according to claim 3, further comprising a counting unit (172) that starts a count of a predetermined shift time when the determination result obtained by the determining unit (171) indicates that the area containing the touched position is the scroll area, wherein
when the count of the predetermined shift time has been completed by the counting unit (172), the switching unit (173) switches the control mode of the displayed screen displayed on the displaying unit (110) from the second control mode to a first control mode that moves a focus display that displays the touched position such that the touched position is distinguishable from surroundings in accordance with a movement of the touched position.

5. The information terminal device (100) according to any of claims 1 to 4, wherein, when a displayed size of an overall area containing the touched position detected by the displaying unit (110) is greater than a screen size of the displayed screen of the displaying unit (110), the determining unit (171) determines that the area is the scroll area.

6. The information terminal device (100) according to any of claims 1 to 5, wherein, when a scrollable object is contained in the area containing the touched position detected by the displaying unit (110), the determining unit (171) determines that the area is the scroll area.

7. The information terminal device (100) according to any of claims 1 to 6, wherein, when a displayed size of an overall area containing the touched position detected by the displaying unit (110) is equal to or less than a screen size of the displayed screen of the displaying unit (110) and when a scrollable object is not contained in the area, the determining unit (171) determines that the area is not the scroll area.

8. A display control method comprising:
displaying information on a displayed screen and detecting, when a touch is performed on the displayed screen, a touched position;
determining whether an area containing the detected touched position is a scroll area targeted for scrolling; and
switching, in accordance with the determination result at the determining, a control mode of the displayed screen.

9. A computer readable storage medium having stored therein a display control program causing a computer to execute a process comprising:
displaying information on a displayed screen and detecting, when a touch is performed on the displayed screen, a touched position;
determining whether an area containing the detected touched position is a scroll area targeted for scrolling; and
switching, in accordance with the determination result at the determining, a control mode of the displayed screen.

10. A display control program containing program code, which when executed by a computer, causes the computer to execute a process comprising:
displaying information on a displayed screen and detecting, when a touch is performed on the displayed screen, a touched position;
determining whether an area containing the detected touched position is a scroll area targeted for scrolling; and
switching, in accordance with the determination result at the determining, a control mode of the displayed screen.
